# EUROPEAN PATENT SPECIFICATION

(11) **EP 4 541 569 B1**
(45) Date of publication and mention of the grant of the patent: **04.03.2026**
(21) Application number: 23205070.8
(22) Date of filing: 22.10.2023
(51) Int. Cl.: B29D 30/00

(54) **METHOD AND APPLICATION UNIT FOR APPLYING A SOUND-ABSORBING MATERIAL IN AN INNER CAVITY OF A PNEUMATIC TYRE**
VERFAHREN UND APPLIKATIONSEINHEIT ZUM APPLIZIEREN EINES SCHALLABSORBIERENDEN MATERIALS IN EINEM INNENRAUM EINES LUFTREIFENS
PROCÉDÉ ET UNITÉ D'APPLICATION POUR APPLIQUER UN MATÉRIAU INSONORISANT DANS UNE CAVITÉ INTERNE D'UN PNEUMATIQUE

(43) Date of publication of application: 23.04.2025
(73) Proprietor: Bridgestone Europe NV/SA, 1930 Zaventem (BE)
(72) Inventor: PONTONE, Roberto, 00128 Roma (IT); CIARNELLA, Alessio, 00128 Roma (IT)
(74) Representative: Studio Torta S.p.A.

(56) References cited:
- EP-A1- 0 714 740
- EP-A1- 1 123 197
- EP-A1- 3 544 798
- EP-A1- 4 171 936
- WO-A1-2016/067192
- WO-A1-2022/002799
- JP-A- 2007 168 243

## Description

### TECHNICAL SECTOR

The present invention relates to a method and application unit for applying a sound-absorbing material in an inner cavity of a pneumatic tyre.

### PRIOR ART

As is known, a pneumatic tyre comprises a toroidal carcass, which has two annular beads and supports an annular tread. Between the carcass and the tread, a tread belt is interposed which is provided with a number of tread plies. Within the carcass, an innerliner is arranged which is airtight, constitutes an inner lining and has the function of retaining the air within the pneumatic tyre in order to maintain the inflation pressure of the pneumatic tyre itself over time.

In recent years the development of pneumatic tyres has been directed towards pneumatic tyres that are internally (i.e. inside their cavity) provided with a sound-absorbing material (generally a sponge or a foam) for reducing the noise generated by a pneumatic tyre rolling on a road surface.

The sound-absorbing material is applied to a pneumatic tyre that has already been vulcanized (inasmuch as the sound absorbing material would not be able to withstand, without being damaged, the combination of heat and pressure that is applied during the vulcanization process), and in particular it is glued or attached to the inner surface of the pneumatic tyre (comprising the innerliner) at the tread (i.e., corresponding to the area of the pneumatic tyre that comes into contact with the asphalt) and possibly also at part of the side walls.

The sound-absorbing material is provided with an adhesive layer that is applied to the surface that is intended to contact the inner cavity of the pneumatic tyre and is initially covered (protected) with a removable protective lining (*"liner"*) that serves the function of both protecting the adhesive layer, and the function of making it possible to wind the sound absorbing material into a coil without the sound-absorbing material sticking to itself.

Typically, the process for the application of the sound-absorbing material inside the inner cavity of a pneumatic tyre provides for starting with a strip of sound-absorbing material (possibly wound into a coil) of a standard length that is more, i.e. longer than required; it is then necessary, initially, to cut the strip of sound-absorbing material in order to eliminate the excess part and thereby confer to the strip of sound-absorbing material the length required depending upon the inner circumference of the pneumatic tyre whereupon the strip of sound-absorbing material is to be glued; in other words, it is necessary, initially, to cut the strip of sound-absorbing material (or acoustic material) to size. After being cut to size, the strip of sound-absorbing material is wound onto itself such as to form a coil.

In practice an operator loads the coil of the strip of sound-absorbing material that has been cut to size into an applicator device comprising an applicator roller that is configured in order to press, after the removal of the protective lining (which occurs a moment before pressing the sound-absorbing material against the inner surface), the sound-absorbing material against the inner surface of the pneumatic tyre; furthermore, the applicator device comprises a protective lining recovery drum whereupon the same protective lining is wound after being separated from the sound-absorbing material (i.e. after having completed its function). The applicator roller and the recovery drum are provided with actuating means that are suitable for bringing the same into rotation around the respective axis of rotation thereof, at appropriate and synchronous speeds, in such a way as to prevent the protective lining and/or the sound-absorbing material from tearing due to excessive tension or being too loose.

When the operator loads the strip of sound-absorbing material into the applicator device, the operator has to manually separate, from the sound-absorbing material, an initial part of the protective lining, which has to then be inserted (again manually) into a slot in the recovery drum. During the application of sound-absorbing material, it is preferable to separate the protective lining from the sound-absorbing material just before the application thereof in such a way as to leave the adhesive exposed to air for as short a period of time as possible, in order to prevent foreign objects (debris, dust, dirt, insects...) from accidentally adhering to the adhesive layer.

In the meantime, the previously vulcanized pneumatic tyre is supported upon motorized rollers that cause it to rotate and that are provided with fixed side rails that prevent any lateral translation of the pneumatic tyre itself. In response to an operator command, an applicator device is inserted into the pneumatic tyre, carried by the motorized rollers, that presses a leading end of the strip of sound-absorbing material against the inner surface of the pneumatic tyre; the pneumatic tyre is then dragged into rotation by the motorized rollers in order to make it possible to apply the sound-absorbing material over the entire inner surface (i.e., making a full turn and thereby imparting an annular shape to the sound-absorbing material).

The method described above for the application of sound-absorbing material within a pneumatic tyre inevitably requires the manual intervention of an operator in order to separate the initial part of the protective lining from the sound-absorbing material; moreover, this operation is particularly long and complicated, even for an experienced operator, and can result in damage to the adhesive layer.

Furthermore, it is important that, during the application within the cavity, the sound-absorbing material does not undergo elongations or compressions which, after a few thousand kilometers of use of the pneumatic tyre, may lead to cracks within the sound-absorbing material itself.

Improvements to the above processes have been presented by this same applicant in:
EP4143017 A1 that discloses a system for applying a layer of sound-absorbing material to the inner surface of a cavity of a pneumatic tyre comprising an applicator device having an applicator roller for implementing the application of the layer of sound-absorbing material to the inner surface after the removal of a lining, a roller for winding the lining after the separation from the layer of sound-absorbing material and synchronization means implemented by means of a transmission member in order to make it possible to maintain substantially uniform the speed of the applicator roller and the winding roller and in
EP4171936 A1 that discloses a method and an application unit for applying a sound-absorbing material to an inner cavity of a pneumatic tyre comprising the steps of: eliminating an excess end of a strip of sound-absorbing material; implementing by means of the strip a separation opening that starts from an opposite side of the protective lining and ends at the protective lining which remains intact, and separating the excess end from the remaining part of the strip of sound-absorbing material; and pulling the excess end in relation to the remaining part of the strip such as to separate the protective lining from the strip.
EP3544798A1 discloses a process and an apparatus for applying noise-reducing elements to a tyre for vehicle wheels.
EP1123197A1 discloses a method and apparatus for cutting segments from a long sheet of multilayered elastomeric material.
EP0714740A1 discloses a system for cutting a strip of elastomeric material such as a tire tread and comprising an electrically heated knife blade mounted on a carriage for moving the blade across the strip of elastomeric material.

### DESCRIPTION OF THE INVENTION

The object of the present invention is to provide a method and an application unit for applying a sound-absorbing material within an inner cavity of a pneumatic tyre, which method and application unit are an alternative to those known in the prior art and specificlly to the one disclosed in EP4171936 and make it possible to render the entire application cycle even more efficient (i.e. quicker and less expensive) , more effective (i.e. capable of avoiding damage to the adhesive layer during the separation of the initial part of the protective lining from the sound-absorbing material) and even more sustainable since not requiring any cooling step.

According to the present invention a method and an application unit are provided for applying a sound-absorbing material inside an inner cavity of a pneumatic tyre, according to what set forth in the attached claims.

The claims describe preferred embodiments of the present invention forming an integral part of the present description.

### BRIEF DESCRIPTION OF THE DRAWINGS

The present invention will now be described with reference to the attached drawings, which show an exemplary, non-limiting embodiment, wherein:
- Figure 1 is a schematic view of a pneumatic tyre provided with sound-absorbing material arranged inside an inner cavity of a pneumatic tyre;
- Figure 2 is a schematic view of an application unit for applying a sound-absorbing material inside the inner cvity of a tyre;
- Figures 3, 4 and 5 are multiple views at different instants of operation of a separation station of the application unit of Figure 2, wherein an excess end is separated from a strip of sound-absorbing material; and
- Figures 6-10 are multiple views at different instants of operation of a coupling station of the application unit of Figure 2 wherein a strip of sound-absorbing material is applied to an inner cavity of a pneumatic tyre.

### PREFERRED EMBODIMENTS OF THE INVENTION

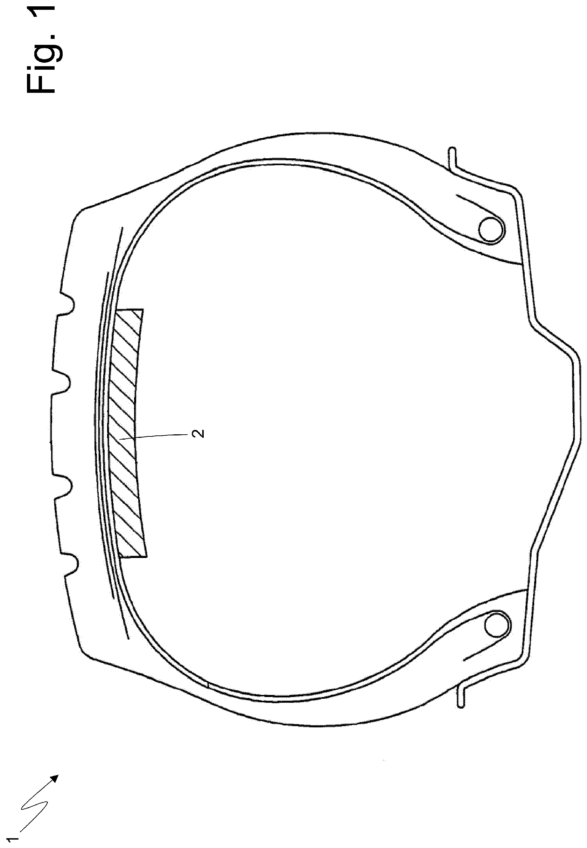

In Figure 1, the numeral 1 denotes, in the entirety thereof, a pneumatic tyre that is mounted on a rim and that comprises a toroidal carcass having two annular beads and that supports an annular tread. Between the carcass and the tread, a tread belt is interposed which is provided with a number of tread plies. Within the carcass, an innerliner is arranged which is airtight, constitutes an inner lining and has the function of retaining the air within the pneumatic tyre in order to maintain the inflation pressure of the pneumatic tyre itself over time. Inside the inner cavity of the pneumatic tyre 1, i.e., in contact with the inner surface of the pneumatic tyre 1 comprising the innerliner, a loop (or annulus) of sound absorbing material 2 is affixed (generally a sponge or a foam) to reduce the noise generated by the rolling of the pneumatic tyre upon the road surface.

The sound-absorbing material 2 is applied to a pneumatic tyre 1 that has already been vulcanized (inasmuch as the sound absorbing material 2 would not be able to withstand, without being damaged, the combination of heat and pressure that is applied during the vulcanization process), and in particular it is attached or glued to the inner surface of the pneumatic tyre 1 (comprising the innerliner) at the tread (i,e, corresponding to the area of the pneumatic tyre that contacts with the asphalt) and possibly (but not necessarily) also at part of the side walls.

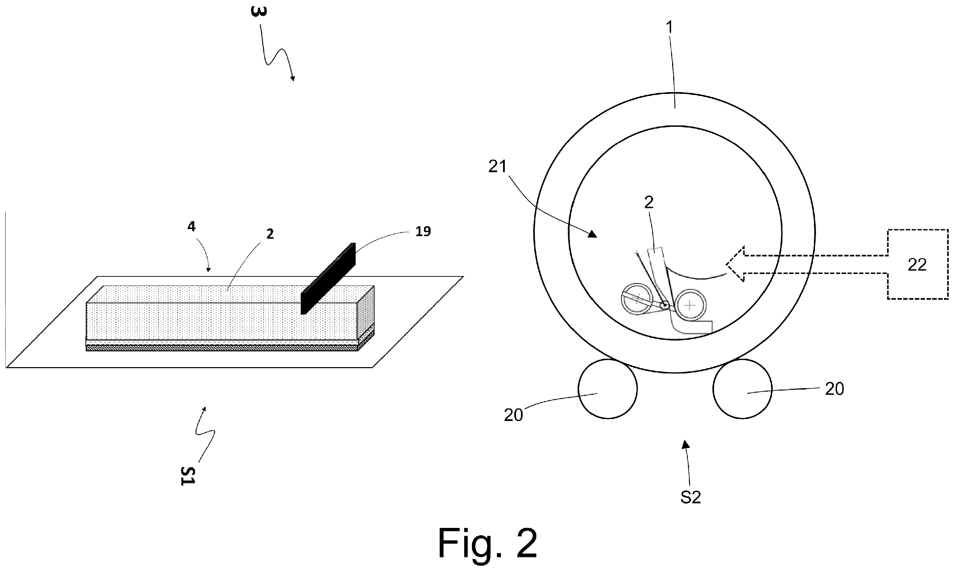

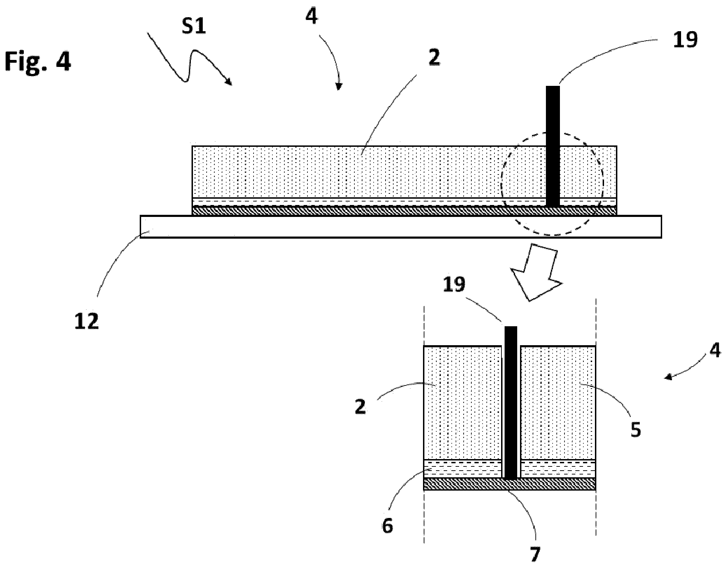

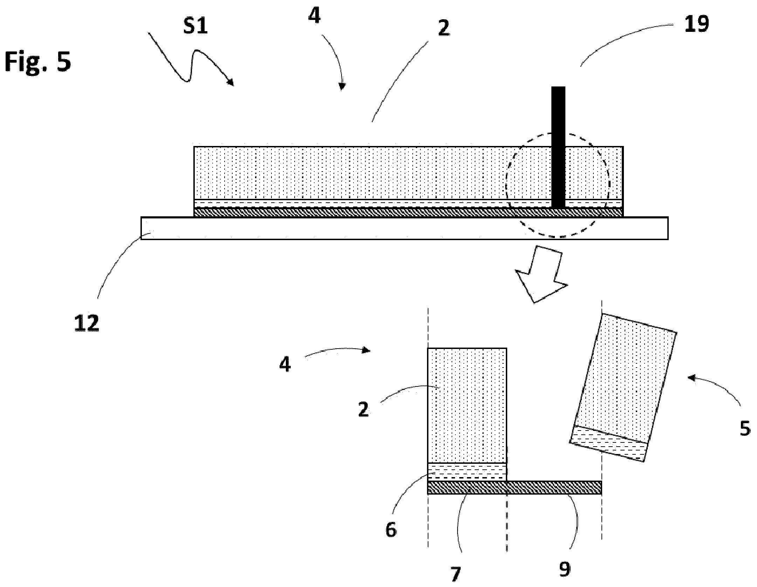

In Figure 2, indicated in the entirety thereof with the number 3 is an application unit that is suitable for applying the sound-absorbing material 2, having an annular form, to the inner cavity of the pneumatic tyre 1. The application unit 3 comprises a separation station S1, wherein an excess end 5 (illustrated in Figures 4 and 5) is separated from a strip 4 of sound-absorbing material 2 and a coupling station S2, wherein the strip 4 of sound-absorbing material 2 (deprived of the excess end 5) is applied to the inner cavity of the pneumatic tyre 1.

In particular, the strip 4 of sound-absorbing material 2, initially, has a standard length that, depending upon the inner circumference of the inner cavity of the pneumatic tyre 1, is greater than the required length, and therefore, initially, it is necessary to cut it to size, removing from the strip 4 of sound-absorbing material 2 the excess end 5 in such a way as to confer to the same strip 4 of sound-absorbing material 2 the required length (calculated as a function of the inner circumference of the pneumatic tyre 1).

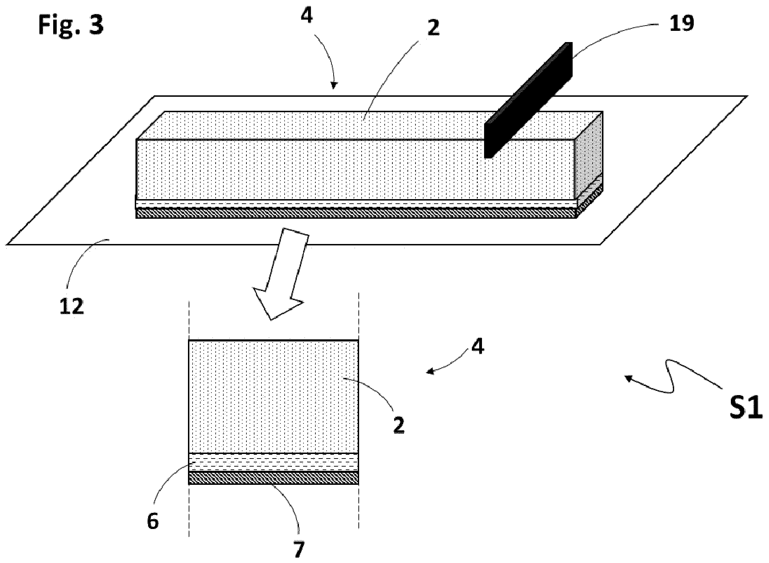

As illustrated in Figures 3, 4 and 5, the strip 4 of sound-absorbing material 2 is provided on one side with an adhesive layer 6 that is intended to connect the sound-absorbing material 2 to the inner surface of the pneumatic tyre and that is covered by a protective lining 7 (i.e., with a ribbon of plastic material that adheres in a removable manner to the adhesive layer 6). That is to say that the adhesive layer 6 is applied to the surface of the sound-absorbing material 2 that is intended to come into contact with the inner cavity of the pneumatic tyre 1 and that is initially covered (protected) with the removable protective lining 7 that serves both the function of protecting the adhesive layer 6 and the function of making it possible to wind the strip 4 of sound absorbing material 2 into a coil without the sound absorbing material 2 sticking to itself.

As previously stated, initially, in the separation station S1 the strip 4 of sound-absorbing material 2 is cut in such a way as to separate the excess end 5 and to thereby confer the required length (in order to implement, without overlapping, a loop of sound-absorbing material 2 within the pneumatic tyre 1) to the strip 4 of sound-absorbing material 2; normally the strip 4 of sound-absorbing material 2 initially has a length that is only slightly longer than necessary, and therefore the cutting to size of the strip 4 of sound-absorbing material 2 involves the waste of only a small piece of sound-absorbing material 2 (i.e., the excess end 5 is small in size, generally ranging from a few centimeters to a few tens of centimeters).

As illustrated in Figure 4, by means of a heated instrument 19 the strip 4 of sound-absorbing material 2 is cut, starting from an opposite side of the protective lining 7, leaving intact the protective lining 7. Due to the fact that the instrument 19 is heated, the cut or incision of the sound-absorbing material 2 happens by way of thermal separation and not by way of mechanical separation, i.e. without mechanical friction. The heated instrument 19 can easily penetrate through the sound-absorbing material 2 as well as through the adhesive layer 6, but cannot intact the protective lining 7. In operation the heated instrument (19) has a temperature comprised in the range of 150 °C and 300 °C, preferably in the range of 240 °C and 280 °C, even more preferably around 260 °C.

The heated instrument 19 can easily penetrate through the sound-absorbing material since due to the heat, the bonds of the cells of the sound-absorbing material (usually a sponge or foam) are easily broken. A too low temperaure would not lead to the same effect since the bonds would not break and a too high temperature would cause the material of the sound-absorbing material to burn causing a consequent non desired smoke generation.

The cut or incision operation separates the excess end 5 from the remaining part of the strip 4 of the sound-absorbing material 2; in other words, the cut depth involves the entire depth of the sound-absorbing material 2 and the adhesive layer 6, separating the excess end 5 from the remaining part of the strip 4 of sound-absorbing material 2, without involving the protective lining 7 which remains intact, constituting a residual connection between the excess end 5 and the remaining part of the strip 4 of sound-absorbing material 2.

As illustrated in Figure 5, the excess end 5 of the strip 4 of sound-absorbing material 2 is then eliminated such as to confer a required length to the same strip 4 of sound-absorbing material 2 and leaving intact a residual portion 9 of the protective lining 7. The residual portion 9 of the protective lining 7 extends beyond the remaining part of the strip 4 of sound-absorbing material 2 from which the excess end 5 has been removed from.

The heated instrument 19 is preferably a blade, more preferably a heated blade. The blade can be of solid shape or have an U-shape. The U-shape of the blade facilitating the penetration into the sound-abosrbing material 2 during the cut (or incision) along the gauge of the sound-absorbing material 2.

The heated instrument 19 is preferably made of metal.

The heated instrument 19 is preferbly heated electrically.

Preferably the heated instrument 19 is blunt, i.e. it does not have sharp edges, to further preserve the integrity of the protective lining 7.

As illustrated in Figure 2, once the strip 4 of sound-absorbing material 2 has completed the processing cycle thereof in the separation station S1 (i.e., when the cut has been completed which separates the excess end 5 from the remaining part of the strip 4 of sound-absorbing material 2, leaving intact the protective lining 7 and the excess portion 5 has been eliminated), the strip 4 of sound-absorbing material 2 is wound on itself such as to form a coil (which terminates externally with the residual portion 9 of the protective lining 7) and is then transferred (in more or less an automated manner) to the coupling station S2.

The coupling station S2 comprises a support device that is suitable for supporting and bringing into rotation, around a central axis thereof, the pneumatic tyre 1. In particular, the support device 20 comprises motorized rollers whereupon the pneumatic tyre 1 itself rests and side rails (not illustrated) that contain the pneumatic tyre 1, preventing the pneumatic tyre 1 from performing any form of lateral translation during the rotational movement thereof.

The coupling station S2 comprises an applicator device 21 that is suitable for applying the strip 4 of sound-absorbing material 2 to the inner surface of the pneumatic tyre 1, progressively removing the protective lining 7. That is to say, the applicator device 21 progressively separates the protective lining 7 from the strip 4 of sound-absorbing material 2 as the strip 4 of sound-absorbing material 2 is applied to the inner cavity of the pneumatic tyre 1; in particular, the applicator device 21 initially pulls the residual portion 9 of the protective lining 7 in relation to the remaining part of the strip 4 of sound-absorbing material 2 such as to separate the protective lining 7 from the strip 4 of sound-absorbing material 2, i.e. the applicator device 21 uses the residual portion 9 of the protective lining 7 as a gripping point in order to begin to separate the protective lining 7 from the strip 4 of sound-absorbing material 2.

The coupling station S2 comprises a movement device 22 that supports the applicator device 21 and that is suitable for moving the applicator device 21 between a loading/unloading position wherein the applicator device 21 is separated from the pneumatic tyre 1 (that is external to the pneumatic tyre 1) and a work position (illustrated in Figure 2) wherein the applicator device 21 is located within the pneumatic tyre 1. In the loading/unloading position, a new strip 4 of sound-absorbing material 2, wound into a coil, is loaded into the applicator device 21 whilst only the previously applied protective lining 7 of a strip 4 of sound-absorbing material 2 is unloaded (removed) from the applicator device 21. Conversely, in the work position (illustrated in Figure 2) a new strip 4 of sound-absorbing material 2, inserted into the applicator device 21, is applied to the inner cavity of the pneumatic tyre 1.

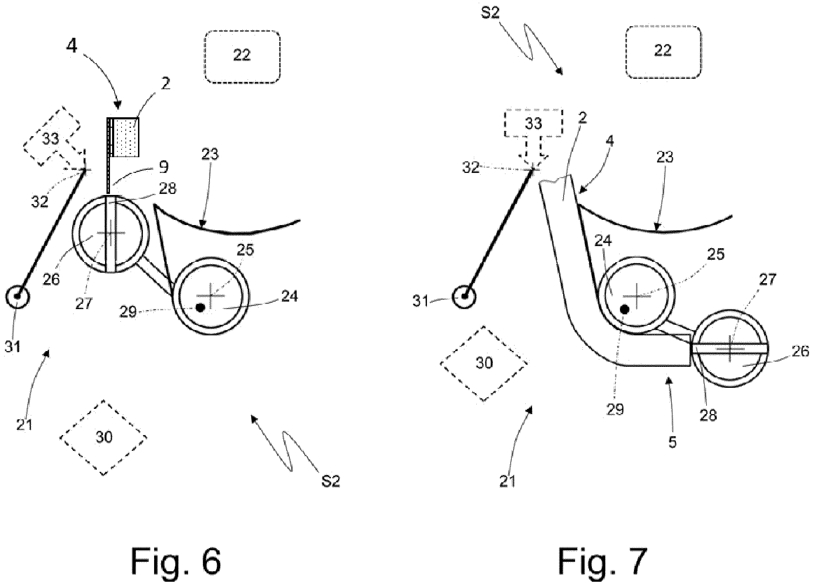

According to what illustrated in Figures 6-10, the applicator device 21 comprises a housing 23 that is suitable for containing the strip 4 of sound-absorbing material 2 wound into a coil, an applicator roller 24 which, being mounted rotating around an axis of rotation 25, is suitable for pressing the strip 4 of sound-absorbing material 2 against the inner surface of the pneumatic tyre 1 in order to adhere the strip 4 of sound-absorbing material 2 to the inner surface of the pneumatic tyre 1, and a recovery drum 26 that is mounted rotating around an axis 27 of rotation parallel to the axis 25 of rotation, and that is suitable for winding the protective lining 7, step-by-step, such that the protective lining 7 is separated from the strip 4 of sound-absorbing material 2. In particular, the housing 23 is arranged above the applicator roller 24 and above the recovery drum 26. In other words, the applicator device 21 comprises an applicator roller 24 that is configured to press the sound-absorbing material 2 against the inner surface of the pneumatic tyre 1, after the removal of the protective lining 7, which occurs a moment before pressing the sound-absorbing material 2 against the inner surface of the pneumatic tyre 1; furthermore, the applicator device 21 comprises a protective lining recovery drum 26, whereupon the same protective lining 7 is wound after being separated from the sound-absorbing material 2, i.e., after having completed its function.

During the application of the sound-absorbing material 2, it is preferable to separate the protective lining 7 from the sound-absorbing material 2, just before the application thereof, in such a way as to leave the adhesive layer 6 exposed to air for as short a period of time as possible, in order to prevent foreign objects (debris, dust, dirt, insects...) from accidentally adhering to the adhesive layer 6.

The applicator roller 24 and the recovery drum 26 are provided with actuating means that are suitable for bringing them into rotation around the respective axis 25 and 27 of rotation at appropriate and synchronous speeds in such a way as to prevent the protective lining 7 and/or the sound-absorbing material 2 from tearing due to excessive tension or being too loose.

In one alternative embodiment the applicator roller 24 and the recovery drum 26 are provided with actuating means that are suitable for bringing them into rotation around the respective axis 25 and 27 of rotation at appropriate and non-synchronous, i.e. asynchronous speeds. In such a way the tension and/or the compression of the protective lining 7 and/or the sound-absorbing material 2 can be adjusted.

The recovery drum 26 is provided with a motorized grip member 28 (for example a gripper provided with two opposing jaws) that is suitable for grasping the residual portion 9 of the protective lining 7 of the strip 4 of sound-absorbing material 2 that is wound into a coil and located in the housing 23; i.e., the recovery drum 26 supports the motorized grip member 28 that is suitable for grasping the residual portion 9 of the protective lining 7 of the strip 4 of sound-absorbing material 2.

The recovery drum 26 is mounted movable in the applicator device 21 in order to move itself to different positions (illustrated in Figures 6-10) along a circular trajectory (i.e., along an arc of circumference); i.e., the recovery drum 26, other than being mounted rotating around the central axis 27 of rotation in order to rotate upon itself, it is pivotally mounted in order to rotate around a further axis 29 of rotation that is parallel and eccentric (i.e., non-coaxial) in relation to the axis 25 and 27 of rotation (i.e., in relation to the applicator roller 24 and the recovery drum 26). In particular, an actuator device 30 is provided that moves, as will be explained below, the recovery drum 26, by rotating the recovery drum 26 about the axis 29 of rotation (i.e., causing the recovery drum 26 to complete a circular path).

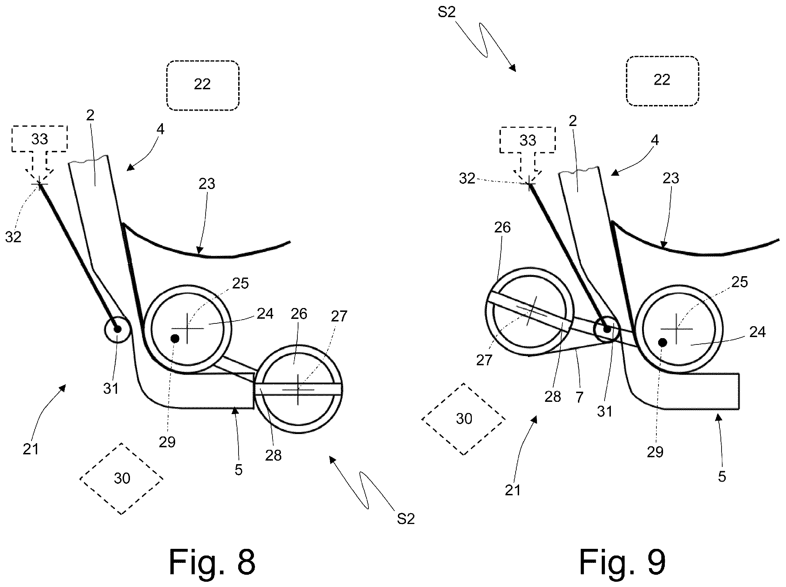

The applicator device 21 comprises a presser roller 31 that is suitable for pressing the strip 4 of sound-absorbing material 2 against the applicator roller 24 and that is mounted idling at one end of an arm that is hinged such as to rotate around an axis 32 of rotation (parallel to the axis 25, 27 and 29 of rotation) under the control of an actuator device 33. In rotating around the axis 32 of rotation, the presser roller 31 is movable between a passive position (illustrated in Figures 6 and 7) wherein the presser roller 31 is at a distance from the applicator roller 24 and from the strip 4 of sound-absorbing material 2, and an active position (illustrated in Figures 8, 9 and 10) wherein the presser roller 31 presses the strip 4 of sound-absorbing material 2 against the applicator roller 24.

Whilst the applicator device 21 is located in the loading/unloading position (i.e., externally to the pneumatic tyre 1), the strip 4 of sound-absorbing material 2 is inserted, coiled, into the housing 23 of the applicator device 21, arranging the the residual portion 9 of the protective lining 7 outside the housing 23 and facing downwards. Subsequently, the motorized grip member 28 of the recovery drum 26 grasps the the residual portion 9 of the protective lining 7; during this step, the recovery drum 26 is arranged at an initial position (illustrated in Figure 6) wherein the recovery drum 26 is arranged to the left of the applicator drum 24 (i.e., from a first side of the applicator drum 24) and is facing an outlet of the housing 23.

Subsequently, the actuator device 30 moves the recovery drum 26, which is holding the residual portion 9 of the protective lining 7, from the initial position (illustrated in Figure 6) to an intermediate position (illustrated in Figure 7) wherein the recovery drum 26 is arranged to the right of the applicator drum 24 (i.e., from a second side of the applicator drum 24 opposite the first side) such as to partially wind the strip 4 of sound-absorbing material 2 around the applicator roller 24. In other words, the actuator device 30 moves the recovery drum 26, which is holding the the residual portion 9 of the protective lining 7, from the first side of the applicator roller 24 to the second side of the applicator roller 24 opposite the first side, such as to partially wind the strip 4 of sound-absorbing material 2 around the applicator roller 24.

Subsequently and as illustrated in Figure 8, the actuator device 33 moves the presser roller 31 from the passive position (illustrated in Figure 7) to the active position (illustrated in Figure 8) such as to press the strip 4 of sound-absorbing material 2 against the applicator roller 24.

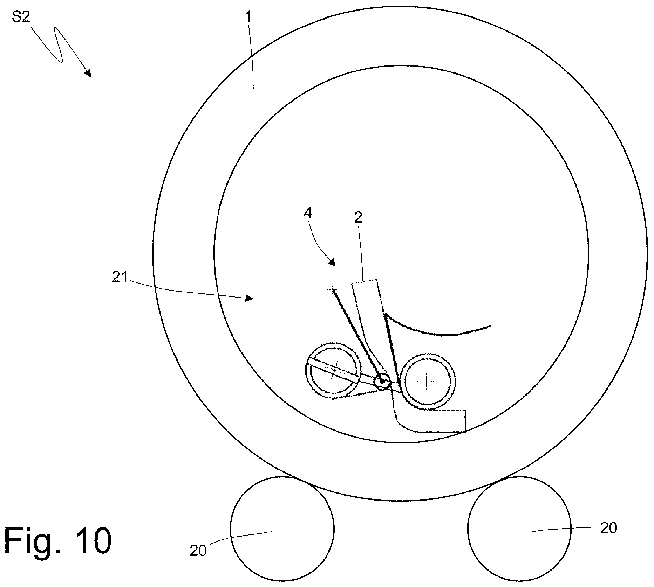

Subsequently and as illustrated in Figure 9, the actuator device 30 moves the recovery drum 26, which is holding the the residual portion 9 of the protective lining 7, from the intermediate position (illustrated in Figures 7 and 8) to a final position (illustrated in Figure 9) wherein the recovery drum 26 is arranged to the left of the applicator drum 24 (i.e., from the first side of the applicator drum 24) such as to separate part of the protective lining 7 from the strip 4 of sound-absorbing material 2. In other words, the actuator device 30 moves the recovery drum 26, which is holding the the residual portion 9 of the protective lining 7, from the second side of the applicator roller 24 to the first side of the applicator roller 24, such as to separate part of the protective lining 7 from the strip 4 of sound-absorbing material 2. When the recovery drum 26 is moved from the intermediate position (illustrated in Figures 7 and 8), which is located at the second side of the applicator roller 24, to the final position (illustrated in Figures 9 and 10), which is located at the first side of the applicator roller 24, the protective lining 7 is partially wound around the recovery drum 26.

Thus, the applicator device 21 is suitable for pulling the the residual portion 9 of the protective lining 7 in relation to the remaining part of the strip 4 of sound-absorbing material 2 such as to separate the protective lining 7 from the strip 4 of sound-absorbing material 2.

In particular, the final position (illustrated in Figure 9) of the recovery drum 26 is different than the initial position (illustrated in Figure 7) of the recovery drum 26, i.e., when the recovery drum 26 is moved from the second side of the applicator roller 24 to the first side of the applicator roller 24, then it is arranged in the final position (illustrated in Figure 9), which is different in relation to the initial position (illustrated in Figure 6) that is assumed in order to grasp the the residual portion 9 of the protective lining 7 (i.e. to grasp the initial part of the protective lining 7).

It should be noted that the recovery drum 26 is moved from the intermediate position (illustrated in Figures 7 and 8), which is located at the second side of the applicator roller 24, to the final position (illustrated in Figures 9 and 10), which is located at the first side of the applicator roller 24, before inserting the applicator device 21 (comprising the applicator roller 24 and the recovery drum 26) into the pneumatic tyre 1.

At this point and as illustrated in Figure 10, the movement device 22 moves the applicator device 21 between the loading/unloading position (assumed in Figures 6-9), wherein the applicator device 21 is separated from, and external to, the pneumatic tyre 1, and the work position (illustrated in Figures 2 and 10) wherein the applicator device 21 is located inside the pneumatic tyre 1. In the work position (illustrated in Figures 2 and 10), the applicator roller 24 presses the strip 4 of sound-absorbing material 2 against the inner cavity of the pneumatic tyre 1, whilst the pneumatic tyre 1 is caused to rotate and, simultaneously, the recovery drum 26 is rotated synchronously with the pneumatic tyre 1, such as to wind the protective lining 7 around the recovery drum 26, step-by-step, as the protective lining 7 is separated from the strip 4 of sound-absorbing material 2.

In other words, the applicator device 21, when it is in the work position within the pneumatic tyre 4, is configured to progressively separate the protective lining 7 from the strip 4 of sound-absorbing material 2, step-by-step, as the strip 4 of sound-absorbing material 2 is applied to the inner cavity of the pneumatic tyre 1.

According to a preferred embodiment, the presser roller 31 moves away from the strip 4 of sound-absorbing material 2 before commencing with the rotation of the pneumatic tyre 1; i.e., the actuator device 33 moves the presser roller 31 from the active position (illustrated in Figures 8, 9 and 10) to the passive position (illustrated in Figures 6 and 7) before commencing with the rotation of the pneumatic tyre 1.

The embodiments described herein may be combined without departing from the scope of protection of the present invention.

The application unit 3 described above has many advantages.

In the first place, the application unit 3 described above enables to fully automate the processing cycle, also as regards the separation of the initial part of the protective lining 7 from the sound-absorbing material 2; this result is obtained by virtue of the fact that the initial part of the protective lining 7 can be grasped by grasping the the residual portion 9 of the protective lining 7 which can be easily grasped, also in an automated manner (being of considerable size and substantially disconnected from the remaining part of the strip 4 of sound-absorbing material 2).

Furthermore, the application unit 3 described above allows for the whole application cycle to be more efficient (i.e., faster and less expensive, especially by virtue of the possibility of complete automation) and also more effective (i.e., capable of ensuring high quality of application such to avert any damage to the sound-absorbing material 2).

In particular, the application unit 3 described above ensures that, during the application within the inner cavity of the pneumatic tyre 1, the sound-absorbing material 2 does not undergo elongations or compressions which, after a few thousand kilometers of use of the pneumatic tyre 1, may lead to cracks within the same sound-absorbing material 2.

The method described above for applying a sound-absorbing material 2 to an inner cavity of a pneumatic tyre 1 using a strip 4 of sound-absorbing material 2 provided on one side with an adhesive layer 6 covered with a protective lining 7 comprises the steps of:
cutting, starting from an opposite side of the protective lining 7, the strip 4 of sound-absorbing material 2 and leaving intact the protective lining 7;
separating an excess end 5 from the remaining part of the strip 4 of sound-absorbing material 2;
eliminating the excess end 5 of the strip 4 of sound-absorbing material 2 such as to confer a required length to the same strip 4 of sound-absorbing material 2 and leaving intact a residual portion 9 of the protective lining 7;
progressively separating the protective lining 7 from the strip 4 of sound-absorbing material 2, step-by-step, as the strip 4 of sound-absorbing material 2 is applied to the inner cavity of the pneumatic tyre 1;
wherein the cutting step is carried out by means of a heated instrument 19.

### LIST OF REFERENCE NUMBERS IN THE FIGURES

1 pneumatic tyre
2 sound-absorbing material
3 application unit
4 strip
5 excess end
6 adhesive layer
7 protective lining
8 separation opening
9 residual portion of the protective lining
12 support plane
19 heated instrument
20 motorized rollers
21 applicator device
22 movement device
23 housing
24 applicator roller
25 axis of rotation
26 recovery drum
27 axis of rotation
27 presser member
29 axis of rotation
30 actuator device
31 presser roller
32 axis of rotation
33 actuator device
S1 separation station
S2 coupling station

## Claims

1. Method for applying a sound-absorbing material (2) to an inner cavity of a pneumatic tyre (1) using a strip (4) of sound-absorbing material (2) provided on one side with an adhesive layer (6) covered with a protective lining (7);
the method comprising the steps of:
cutting, starting from an opposite side of the protective lining (7), the strip (4) of sound-absorbing material (2) and leaving intact the protective lining (7);
separating an excess end (5) from the remaining part of the strip (4) of sound-absorbing material (2); and
progressively separating the protective lining (7) from the strip (4) of sound-absorbing material (2), step-by-step, as the strip (4) of sound-absorbing material (2) is applied to the inner cavity of the pneumatic tyre (1);
the method being **characterized in** comprising the steps of:
utilizing a heated instrument (19) for cutting the strip (4) of sound-absorbing material (2); and
eliminating the excess end (5) of the strip (4) of sound-absorbing material (2) such as to confer a required length to the same strip (4) of sound-absorbing material (2) and leaving intact a residual portion (9) of the protective lining (7) and such as the residual portion (9) of the protective lining (7) extends beyond a remaining part of the strip (4) of sound-absorbing material (2) from which the excess end (5) has been removed from.

2. Method according to claim 1, wherein the step of eliminating the excess end (5) of the strip (4) of sound-absorbing material (2) further comprises the step of eliminating the adhesive layer (6) corresponding and adhered to the excess end (5) .

3. Method according to any of the preceding claims, wherein the heated instrument (19) is blunt.

4. Method according to any of the preceding claims wherein the heated instrument (19) is a blade.

5. Method according to any of the preceding claims wherein when in operation the heated instrument (19) has a temperature comprised in the range of 150 °C and 300 °C, preferably comprised in the range of 240 °C and 280 °C and even more preferably a temperature of about 260 °C.

6. Method according to any of the preceding claims, wherein the heated instrument (19) is U-shaped.

7. Method according to any of the preceding claims and comprising the further steps of:
grasping the residual portion (9) of the protective lining (7) by means of a grip member (28) that is integral to a recovery drum (26) and whilst the recovery drum (26) is at a first side of an applicator roller (24);
moving the recovery drum (26), which is holding the residual portion (9) of the protective lining (7), from the first side of the applicator roller (24) to the second side of the applicator roller (24), opposite the first side, such as to partially wind the strip (4) of sound-absorbing material (2) around the applicator roller (24);
pressing the strip (4) of sound-absorbing material (2) against the applicator roller (24) by means of a presser roller (31); and
moving the recovery drum (26), which is holding the residual portion (9) of the protective lining (7), from the second side of the applicator roller (24) to the first side of the applicator roller (24), such as to separate part of the protective lining (7) from the strip (4) of sound-absorbing material (2).

8. Method according to claim 7 and comprising the further steps of:
pressing, by means of the applicator roller (24), the strip (4) of sound-absorbing material (2) against the inner cavity of the pneumatic tyre (1) whilst the pneumatic tyre (1) is caused to rotate; and
rotating the recovery drum (26) synchronously with the pneumatic tyre (1) in order to wind the protective lining (7) around the recovery drum (26), step-by-step, as the protective lining (7) is separated from the strip (4) of sound-absorbing material (2).

9. Method according to any one of claims 1 to 8, wherein an applicator device (21) pulls the the residual portion (9) of the protective lining (7) in relation to the remaining part of the strip (4) of sound-absorbing material (2) such as to separate the protective lining (7) from the strip (4) of sound-absorbing material (2).

10. Application unit (3) for applying a sound-absorbing material (2) in an inner cavity of a pneumatic tyre (1) using a strip (4) of sound-absorbing material (2) provided on one side with an adhesive layer (6) covered with a protective lining (7); the application unit (3) comprising:
a separation station (S1) that is suitable for eliminating an excess end (5) of the strip (4) of sound-absorbing material (2) such as to confer a required length to the same strip (4) of sound-absorbing material (2); and
an applicator device (21) that is configured in order to progressively separate the protective lining (7) from the strip (4) of sound-absorbing material (2), step-by-step, as the strip (4) of sound-absorbing material (2) is applied to the inner cavity of the pneumatic tyre (1);
the application unit (3) is **characterized in that:**
the separation station (S1) is configured such as to cut by means of a heated instrument (19), starting from an opposite side of the protective lining (7), the strip (4) of sound-absorbing material (2) and leave intact the protective lining (7);
the separation station (S1) is configured such as to separate an excess end (5) from the remaining part of the strip (4) of sound-absorbing material (2); and
the separation station (S1) is configured such as to eliminate the excess end (5) of the strip (4) of sound-absorbing material (2) such as to confer a required length to the same strip (4) of sound-absorbing material (2) and leave intact a residual portion (9) of the protective lining (7) and such as the residual portion (9) of the protective lining (7) extends beyond a remaining part of the strip (4) of sound-absorbing material (2) from which the excess end (5) has been removed from.

11. Application unit (3) according to claim 10, wherein the heated instrument (19) is blunt.

12. Application unit (3) according to claims 10-11, wherein the heated instrument (19) is a blade.

13. Application unit (3) according to claims 10-12, wherein when in operation the heated instrument (19) has a temperature comprised in the range of 150 °C and 300 °C, preferably comprised in the range of 240 °C and 280 °C and even more preferably about 260 °C.

14. Application unit (3) according to claims 10-13, wherein the heated instrument (19) is U-shaped.

15. Application unit (3) according to any one of claims 10 to 14, wherein an applicator device (21) is suitable for pulling the the residual portion (9) of the protective lining (7) in relation to the remaining part of the strip (4) of sound-absorbing material (2) such as to separate the protective lining (7) from the strip (4) of sound-absorbing material (2).

## Patentansprüche

1. Verfahren zum Aufbringen eines schallabsorbierenden Materials (2) auf einen Innenhohlraum eines pneumatischen Reifens (1) unter Verwendung eines Streifens (4) aus schallabsorbierendem Material (2), der auf einer Seite mit einer Haftschicht (6) versehen ist, die mit einer Schutzauskleidung (7) bedeckt ist; wobei das Verfahren die Schritte umfasst:
Abschneiden, beginnend von einer gegenüberliegenden bzw. entgegengesetzten Seite der Schutzauskleidung (7), des Streifens (4) aus schallabsorbierendem Material (2) und Intakt-Belassen der Schutzauskleidung (7);
Abtrennen eines überschüssigen Endes (5) von dem verbleibenden Teil des Streifens (4) aus schallabsorbierendem Material (2); und
progressives Abtrennen der Schutzauskleidung (7) von dem Streifen (4) aus schallabsorbierendem Material (2), und zwar schrittweise, während der Streifen (4) aus schallabsorbierendem Material (2) auf den Innenhohlraum des pneumatischen Reifens (1) aufgebracht wird;
wobei das Verfahren **dadurch gekennzeichnet ist, dass** es die Schritte umfasst:
Verwenden eines beheizten Instruments (19) zum Abschneiden des Streifens (4) aus schallabsorbierendem Material (2); und
Eliminieren des überschüssigen Endes (5) des Streifens (4) aus schallabsorbierendem Material (2) so, um diesem Streifen (4) aus schallabsorbierendem Material (2) eine erforderliche Länge zu verleihen und einen Restabschnitt (9) der Schutzauskleidung (7) intakt zu lassen und so, dass sich der Restabschnitt (9) der Schutzauskleidung (7) über einen verbleibenden Teil des Streifens (4) aus schallabsorbierendem Material (2) hinaus erstreckt, von dem das überschüssige Ende (5) entfernt wurde.

2. Verfahren nach Anspruch 1, wobei der Schritt des Eliminierens des überschüssigen Endes (5) des Streifens (4) aus schallabsorbierendem Material (2) ferner den Schritt eines Eliminierens der dem überschüssigen Ende (5) entsprechenden und daran haftenden Haftschicht (6) umfasst.

3. Verfahren nach einem der vorhergehenden Ansprüche, wobei das beheizte Instrument (19) stumpf ist.

4. Verfahren nach einem der vorhergehenden Ansprüche, wobei das beheizte Instrument (19) eine Klinge ist.

5. Verfahren nach einem der vorhergehenden Ansprüche, wobei das beheizte Instrument (19) in Betrieb eine Temperatur, die in dem Bereich von 150°C und 300°C umfasst ist, vorzugsweise in dem Bereich von 240°C und 280°C umfasst ist, und noch bevorzugter eine Temperatur von etwa 260°C aufweist.

6. Verfahren nach einem der vorhergehenden Ansprüche, wobei das beheizte Instrument (19) U-förmig ist.

7. Verfahren nach einem der vorhergehenden Ansprüche und umfassend die weiteren Schritte:
Ergreifen des Restabschnitts (9) der Schutzauskleidung (7) mittels eines Greifglieds (28), das integral mit einer Rückgewinnungstrommel bzw. Abrolltrommel (26) ist, und während sich die Rückgewinnungstrommel (26) an einer ersten Seite einer Applikatorwalze (24) befindet;
Bewegen der Rückgewinnungstrommel (26), die den Restabschnitt (9) der Schutzauskleidung (7) hält, von der ersten Seite der Applikatorwalze (24) zu der zweiten Seite der Applikatorwalze (24) gegenüberliegend bzw. entgegengesetzt zu der ersten Seite, um den Streifen (4) aus schallabsorbierendem Material (2) teilweise um die Applikatorwalze (24) zu wickeln;
Pressen des Streifens (4) aus schallabsorbierendem Material (2) gegen die Applikatorwalze (24) mittels einer Andruckwalze (31); und
Bewegen der Rückgewinnungstrommel (26), die den Restabschnitt (9) der Schutzauskleidung (7) hält, von der zweiten Seite der Applikatorwalze (24) zu der ersten Seite der Applikatorwalze (24), um einen Teil der Schutzauskleidung (7) von dem Streifen (4) aus schallabsorbierendem Material (2) zu trennen.

8. Verfahren nach Anspruch 7 und umfassend die weiteren Schritte:
Pressen, mittels der Applikatorwalze (24), des Streifens (4) aus schallabsorbierendem Material (2) gegen den Innenhohlraum des pneumatischen Reifens (1), während der pneumatische Reifen (1) veranlasst wird, sich zu drehen; und
synchrones Drehen der Rückgewinnungstrommel (26) mit dem pneumatischen Reifen (1), um die Schutzauskleidung (7) schrittweise um die Rückgewinnungstrommel (26) zu wickeln, während die Schutzauskleidung (7) von dem Streifen (4) aus schallabsorbierendem Material (2) getrennt wird.

9. Verfahren nach einem der Ansprüche 1 bis 8, wobei eine Applikatorvorrichtung (21) den Restabschnitt (9) der Schutzauskleidung (7) in Relation zu dem verbleibenden Teil des Streifens (4) aus schallabsorbierendem Material (2) zieht, um die Schutzauskleidung (7) von dem Streifen (4) aus schallabsorbierendem Material (2) zu trennen.

10. Applikationseinheit (3) zum Aufbringen eines schallabsorbierenden Materials (2) in einen Innenhohlraum eines pneumatischen Reifens (1) unter Verwendung eines Streifens (4) aus schallabsorbierendem Material (2), der auf einer Seite mit einer Haftschicht (6) versehen ist, die mit einer Schutzauskleidung (7) bedeckt ist; wobei die Applikationseinheit (3) umfasst:
eine Trennstation (S1), die geeignet ist, ein überschüssiges Ende (5) des Streifens (4) aus schallabsorbierendem Material (2) zu eliminieren, um diesem Streifen (4) aus schallabsorbierendem Material (2) eine erforderliche Länge zu verleihen; und
eine Applikatorvorrichtung (21), die konfiguriert ist, die Schutzauskleidung (7) progressiv von dem Streifen (4) aus schallabsorbierendem Material (2) abzutrennen, und zwar schrittweise, während der Streifen (4) aus schallabsorbierendem Material (2) auf den Innenhohlraum des pneumatischen Reifens (1) aufgebracht wird;
wobei die Applikationseinheit (3) **dadurch gekennzeichnet ist, dass**:
die Trennstation (S1) konfiguriert ist, den Streifen (4) aus schallabsorbierendem Material (2) mittels eines beheizten Instruments (19) beginnend von einer gegenüberliegenden bzw. entgegengesetzten Seite der Schutzauskleidung (7) abzuschneiden und die Schutzauskleidung (7) intakt zu lassen;
die Trennstation (S1) konfiguriert ist, ein überschüssiges Ende (5) von dem verbleibenden Teil des Streifens (4) aus schallabsorbierendem Material (2) abzutrennen; und
die Trennstation (S1) konfiguriert ist, das überschüssige Ende (5) des Streifens (4) aus schallabsorbierendem Material (2) zu eliminieren, um diesem Streifen (4) aus schallabsorbierendem Material (2) eine erforderliche Länge zu verleihen und einen Restabschnitt (9) der Schutzauskleidung (7) intakt zu lassen, und so, dass sich der Restabschnitt (9) der Schutzauskleidung (7) über einen verbleibenden Teil des Streifens (4) aus schallabsorbierendem Material (2) hinaus erstreckt, von dem das überschüssige Ende (5) entfernt wurde.

11. Applikationseinheit (3) nach Anspruch 10, wobei das beheizte Instrument (19) stumpf ist.

12. Applikationseinheit (3) nach den Ansprüchen 10-11, wobei das beheizte Instrument (19) eine Klinge ist.

13. Applikationseinheit (3) nach den Ansprüchen 10-12, wobei das beheizte Instrument (19) in Betrieb eine Temperatur, die in dem Bereich von 150°C und 300°C umfasst ist, vorzugsweise in dem Bereich von 240°C und 280°C umfasst ist, und noch bevorzugter eine Temperatur von etwa 260°C aufweist.

14. Applikationseinheit (3) nach den Ansprüchen 10-13, wobei das beheizte Instrument (19) U-förmig ist.

15. Applikationseinheit (3) nach einem der Ansprüche 10 bis 14, wobei eine Applikatorvorrichtung (21) geeignet ist, den Restabschnitt (9) der Schutzauskleidung (7) in Relation zu dem verbleibenden Teil des Streifens (4) aus schallabsorbierendem Material (2) zu ziehen, um die Schutzauskleidung (7) von dem Streifen (4) aus schallabsorbierendem Material (2) zu trennen.

## Revendications

1. Méthode d'application d'un matériau insonorisant (2) sur une cavité interne d'un pneu (1) au moyen d'une bande (4) de matériau insonorisant (2) dotée sur un côté d'une couche adhésive (6) recouverte d'un revêtement interne de protection (7) ;
ladite méthode comprenant les étapes suivantes :
la découpe, en commençant par un côté opposé du revêtement interne de protection (7), de la bande (4) de matériau insonorisant (2) tout en laissant intact le revêtement interne de protection (7) ;
la séparation d'une extrémité excédentaire (5) de la partie restante de la bande (4) de matériau insonorisant (2) ; et
la séparation progressive du revêtement interne de protection (7) de la bande (4) de matériau insonorisant (2), étape par étape, alors que la bande (4) de matériau insonorisant (2) est appliquée dans la cavité interne du pneu (1) ;
la méthode est **caractérisée en ce qu'**elle comprend les étapes suivantes :
l'utilisation d'un instrument chauffé (19) pour la découpe de la bande (4) de matériau insonorisant (2) ; et
l'élimination de l'extrémité excédentaire (5) de la bande (4) de matériau insonorisant (2) de manière à conférer une longueur requise à cette même bande (4) de matériau insonorisant (2), tout en laissant intacte une partie résiduelle (9) du revêtement interne de protection (7) et de sorte que la partie résiduelle (9) du revêtement interne de protection (7) s'étende au-delà d'une partie restante de la bande (4) de matériau insonorisant (2) dont l'extrémité excédentaire (5) a été retirée.

2. Méthode selon la revendication 1, dans laquelle l'étape d'élimination de l'extrémité excédentaire (5) de la bande (4) de matériau insonorisant (2) comprend en outre l'étape d'élimination de la couche adhésive (6) correspondante et collée à l'extrémité excédentaire (5).

3. Méthode selon l'une quelconque des revendications précédentes, dans laquelle l'instrument chauffé (19) est émoussé.

4. Méthode selon l'une quelconque des revendications précédentes, dans laquelle l'instrument chauffé (19) est une lame.

5. Méthode selon l'une quelconque des revendications précédentes dans laquelle, en fonctionnement, l'instrument chauffé (19) présente une température comprise dans la plage de 150 °C à 300 °C, de préférence comprise dans la plage de 240 °C à 280 °C, et encore plus préférentiellement une température d'environ 260 °C.

6. Méthode selon l'une quelconque des revendications précédentes, dans laquelle l'instrument chauffé (19) présente une forme de U.

7. Méthode selon l'une quelconque des revendications précédentes et comprenant les étapes supplémentaires suivantes :
la préhension de la partie résiduelle (9) du revêtement interne de protection (7) au moyen d'un organe de préhension (28) qui est solidaire d'un tambour de récupération (26) et tandis que le tambour de récupération (26) est au niveau d'un premier côté d'un rouleau applicateur (24) ;
le déplacement du tambour de récupération (26), qui maintient la partie résiduelle (9) du revêtement interne de protection (7), du premier côté du rouleau applicateur (24) au second côté du rouleau applicateur (24), opposé au premier côté, de manière à enrouler partiellement la bande (4) de matériau insonorisant (2) autour du rouleau applicateur (24) ;
la pression de la bande (4) de matériau insonorisant (2) contre le rouleau applicateur (24) au moyen d'un rouleau presseur (31) ; et
le déplacement du tambour de récupération (26), qui maintient la partie résiduelle (9) du revêtement interne de protection (7), du second côté du rouleau applicateur (24) vers le premier côté du rouleau applicateur (24), de manière à séparer une partie du revêtement interne de protection (7) de la bande (4) de matériau insonorisant (2).

8. Méthode selon la revendication 7 et comprenant les étapes supplémentaires suivantes :
la pression, au moyen du rouleau applicateur (24), de la bande (4) de matériau insonorisant (2) contre la cavité interne du pneu (1) alors que le pneu (1) est mis en rotation ; et
la rotation du tambour de récupération (26) de manière synchrone avec le pneu (1) afin d'enrouler le revêtement interne de protection (7) autour du tambour de récupération (26), pas à pas, lorsque le revêtement interne de protection (7) est séparé de la bande (4) de matériau insonorisant (2).

9. Méthode selon l'une quelconque des revendications 1 à 8, dans laquelle un dispositif applicateur (21) tire la partie résiduelle (9) du revêtement interne de protection (7) par rapport à la partie restante de la bande (4) de matériau insonorisant (2) de manière à séparer le revêtement interne de protection (7) de la bande (4) de matériau insonorisant (2).

10. Unité d'application (3) pour l'application d'un matériau insonorisant (2) dans une cavité interne d'un pneu (1) au moyen d'une bande (4) de matériau insonorisant (2) dotée sur un côté d'une couche adhésive (6) recouverte d'un revêtement interne de protection (7) ; l'unité d'application (3) comprenant :
une station de séparation (S1) qui est conçue pour éliminer une extrémité excédentaire (5) de la bande (4) de matériau insonorisant (2) de manière à conférer une longueur requise à la même bande (4) de matériau insonorisant (2) ; et
un dispositif applicateur (21) qui est configuré pour séparer progressivement le revêtement interne de protection (7) de la bande (4) de matériau insonorisant (2), étape par étape, lorsque la bande (4) de matériau insonorisant (2) est appliquée dans la cavité interne du pneu (1) ;
l'unité d'application (3) est **caractérisée en ce que** :
la station de séparation (S1) est configurée de manière à couper au moyen d'un instrument chauffé (19), en partant d'un côté opposé du revêtement interne de protection (7), la bande (4) de matériau insonorisant (2) et à laisser intact le revêtement interne de protection (7) ;
la station de séparation (S1) est configurée de manière à séparer une extrémité excédentaire (5) de la partie restante de la bande (4) de matériau insonorisant (2) ; et
la station de séparation (S1) est configurée de manière à éliminer l'extrémité excédentaire (5) de la bande (4) de matériau insonorisant (2) de manière à conférer une longueur requise à cette même bande (4) de matériau insonorisant (2) et à laisser intacte une partie résiduelle (9) du revêtement interne de protection (7) et de sorte que la partie résiduelle (9) du revêtement interne de protection (7) s'étende au-delà d'une partie restante de la bande (4) de matériau insonorisant (2) dont l'extrémité excédentaire (5) a été retirée.

11. Unité d'application (3) selon la revendication 10, dans laquelle l'instrument chauffé (19) est émoussé.

12. Unité d'application (3) selon les revendications 10 à 11, dans laquelle l'instrument chauffé (19) est une lame.

13. Unité d'application (3) selon les revendications 10 à 12, dans laquelle, en fonctionnement, l'instrument chauffé (19) présente une température comprise dans la plage de 150 °C à 300 °C, de préférence comprise dans la plage de 240 °C à 280 °C, et encore plus préférentiellement d'environ 260 °C.

14. Unité d'application (3) selon les revendications 10 à 13, dans laquelle l'instrument chauffé (19) est en forme de U.

15. Unité d'application (3) selon l'une quelconque des revendications 10 à 14, dans laquelle un dispositif applicateur (21) est adapté à tirer la partie résiduelle (9) du revêtement interne de protection (7) par rapport à la partie restante de la bande (4) de matériau insonorisant (2) de manière à séparer le revêtement interne de protection (7) de la bande (4) de matériau insonorisant (2).
